## Europäisches Patentamt

## European Patent Office

## Office européen des brevets

(11) Veröffentlichungsnummer: **0 216 234**
**B1**

(12) **EUROPÄISCHE PATENTSCHRIFT**

(45) Veröffentlichungstag der Patentschrift:
04.04.90

(51) Int. Cl.⁴: **A47J 43/07, A47J 43/10**

(21) Anmeldenummer: 86112392.5

(22) Anmeldetag: 08.09.86

(54) **Rühr- und Schlagbesen.**

(30) Priorität: 23.09.85 DE 3533834

(43) Veröffentlichungstag der Anmeldung:
01.04.87 Patentblatt 87/14

(45) Bekanntmachung des Hinweises auf die Patenterteilung:
04.04.90 Patentblatt 90/14

(84) Benannte Vertragsstaaten:
BE DE FR GB IT NL SE

(56) Entgegenhaltungen:
DE-A- 1 454 027
DE-A- 2 423 910
DE-C- 509 734
DE-C- 942 861
FR-A- 562 532
FR-A- 930 707
FR-E- 37 672

(73) Patentinhaber: Braun Aktiengesellschaft,
Rüsselsheimer Strasse 22, D-6000 Frankfurt/Main(DE)

(72) Erfinder: Haas, Michael, Steinstrasse 13,
D-6242 Kronberg/Ts.(DE)
Erfinder: Reker, Hagen, Bremer Strasse 11,
D-6236 Eschborn(DE)

ACTORUM AG

## Beschreibung

Die Erfindung bezieht sich auf einen Rühr- und Schlagbesen, insbesondere für elektrische Küchenmaschinen und Handmixgeräte, mit einem mit dem Motorantrieb koppelbaren Schaft und mit einem aus mindestens zwei einander überkreuzenden Drahtbügeln zusammengesetzten Haltekopf, der stirnseitig eine zur Schaftachse konzentrische Vertiefung aufweist, in deren Wandung paarweise einander gegenüberliegende, in Achsrichtung verlaufende Längsnuten eingeformt sind, in die die freien Endabschnitte der Drahtbügel eingelegt sind, wobei diese Endabschnitte mittels eines der Vertiefung angepaßten und in dieser befestigen, stopfenförmigen Klemmelements radial nach außen in die Nuten gepreßt und hierdurch festgeklemmt sind und ferner die Endabschnitte der Drahtbügel etwa rechtwinklige Fortsätze aufweisen.

Ein derartiger Rühr- und Schlagbesen ist bereits aus der DE-C 509 734 bekannt. Die Längsseiten der Drahtbügel werden in den in der Wandung der Vertiefung des Haltekopfes ausgebildeten Längsnuten geführt und werden von einem in die Vertiefung einsetzbaren, stopfenförmigen Klemmelement in dieser Lage in den Längsnuten ortsfest gehalten. Die am Ende der Drahtbügel rechtwinklig verlaufenden Fortsätze ragen in am Klemmelement ausgebildeten Bohrungen hinein, so daß hierdurch die Drahtbügel vorwiegend gegen Verschieben in axialer Richtung des Rühr- und Schlagbesens gehalten werden, während die im Haltekopf ausgebildeten Längsnuten vorwiegend die Sicherung der Drahtbügel in Umfangsrichtung des Rühr- und Schlagbesens übernehmen.

Bei diesem Rühr- und Schlagbesen ist es als weniger vorteilhaft anzusehen, daß bei der Montage zum einen die rechtwinklig verlaufenden Fortsätze der Drahtbügel in die hierfür vorgesehenen Bohrungen nur auf zeitraubende und umständliche Art und Weise eingesetzt werden können. Dies ergibt sich alleine daraus, daß das Einfädeln der Fortsätze in die gegenüber dem Durchmesser der Drahtbügel sehr eng tolerierten Bohrungen nicht immer gleich auf Anhieb gelingt sondern immer zuvor erst ein genaues Zentrieren dieser Elemente zueinander erfordert. Da das Klemmelement über eine Schraubverbindung gegen den Haltekopf verspannt wird, ergibt sich eine verhältnismäßig aufwendige und teurere Anordnung dieses Rühr- und Schlagbesens, wodurch sich die Endmontage konstruktionsbedingt recht aufwendig gestaltet und diese daher auch kaum automatisierbar ist.

Der vorliegenden Erfindung liegt die Aufgabe zugrunde, die für die Komplettierung derartiger Rühr- und Schlagbesen erforderliche Anzahl von Einzelteilen zu verringern und durch konstruktive Maßnahmen die Voraussetzungen dafür zu schaffen, daß die Endmontage insgesamt mittels eines Fertigungsautomaten erfolgen kann und somit die Fertigungszeit und insgesamt die Herstellkosten des Rühr- und Schlagbesens minimiert werden.

Die Aufgabe wird erfindungsgemäß dadurch gelöst, daß die Längsnuten in radial zur Mitte des Haltekopfes verlaufende Nuten münden, daß die Fortsätze der Endabschnitte der Drahtbügel mittels des Klemmelements in Achsrichtung in die radial verlaufenden Nuten gepreßt sind, daß sowohl der am Ende der Vertiefung ausgebildete Boden als auch die in die Vertiefung ragende Stirnfläche des Klemmelements derart zweifach wendeltreppenartig gestuft sind, daß je zwei diametrale Stufen zueinander fluchtend auf derselben axialen Höhe liegen, wobei die radial verlaufenden Nuten in die Stufen der Vertiefung eingeformt sind und daß die Stufenhöhe etwa der Drahtstärke der Drahtbügel entspricht.

Der Rühr- und Schlagbesen nach der Erfindung besteht somit nur noch aus drei verschiedenen Teilen, nämlich einmal aus den grundsätzlich in beliebiger Anzahl und Form einsetzbaren Drahtbügeln, ferner aus dem Antriebsschaft mit dem angeformten und als Montagekörper gestalteten Haltekopf und schließlich aus dem stopfenförmigen Klemmelement, das vorzugsweise als Clipsteil ausgebildet ist.

Da sich die Endabschnitte der Drahtbügel in ihren Mittelteilen überkreuzen, ragen diese unterschiedlich weit in die Vertiefung des Haltekopfes hinein. Um stets einen definierten Abstand der einzelnen Drahtbügel untereinander zu gewährleisten, sind daher wendeltreppenartige Stufen sowohl im Haltekopf wie im Klemmelement angeordnet.

Der konstruktive Aufbau des vorgeschlagenen Rühr- und Schlagbesens nach der Erfindung vereinfacht dessen Montage weiterhin, wenn die Einzelteile als einfache Steck- und Clips-Teile ausgebildet sind, so daß diese Teile dann ohne Schwierigkeiten von einem Automaten selbsttätig montiert werden können. Die Geschwindigkeit der Endfertigung ist also völlig unabhängig von den spezifischen Taktzeiten der für die Einzelteilherstellung verwendeten Spritzgußmaschinen und wird auch nicht durch Klebe-, Schweiß- oder Verschraubungsmaßnahmen verzögert.

Da die Verankerung der Drahtbügel in den in die Innenwandung des Haltekopfes eingeformten Längsnuten und somit direkt an einem Teil des Antriebsschaftes erfolgt, wird auch das Drehmoment des Antriebes unmittelbar – das heißt, unter Vermeidung jeglicher Klebe- oder Schweißverbindungen – auf die Drahtbügel übertragen. Durch die radial verlaufenden Nuten sind die Drahtbügel nicht nur gegen in axialer Richtung angreifende Kräfte gesichert, sondern sie sind insbesondere auch gegen Drehkräfte, die eine Verwindung der Drahtbügel in sich bewirken könnten gesichert, das heißt, durch die erfindungsgemäße Ausbildung des Haltekopfes, des Klemmelements und der Drahtbügel wird bei einfacher, automatisch möglicher Montage dennoch eine feste Verbindung der Drahtbügel am Haltekopf erreicht.

Zur Vereinfachung der Montage während des Einführens der Drahtbügel und während des sich anschließenden Einsetzens des Klemmelements ist es vorteilhaft, in der Vertiefung des Haltekopfes einen konzentrischen Führungsstift vorzusehen, der sich passend in eine entsprechende konzentrisch verlaufende Ausnehmung im Klemmelement erstreckt.

Zur Vereinfachung der automatischen Montage und zur Verringerung der Lagerhaltung ist es vorteilhaft, den erfindungsgemäßen Rühr- und Schlagbesen mit Drahtbügeln zu versehen, die alle dieselbe Form und Größe aufweisen.

Um eine einfache Formgebung der einzelnen Bauteile des Rühr- und Schlagbesens zu erreichen, ist es vorteilhaft, wenn die Vertiefung des Haltekopfes und das Klemmelement zylindrisch ausgebildet sind. Die selbstklemmende Fixierung des Klemmelementes im Haltekopf und damit das Sichern der Drahtbügel auch bei stärkster Beanspruchung wird vorteilhaft dadurch erzielt, wenn in die Wandung der Vertiefung eine Ringnut eingeformt ist, in die ein an das Klemmelement angeformter Ringwulst einrastet. Entsprechend umgekehrt kann auch die Vertiefung einen Ringwulst und das Klemmelement eine Ringnut aufweisen.

Die beigefügte Zeichnung veranschaulicht die Erfindung an einem Ausführungsbeispiel, und zwar zeigen

Figur 1 die Seitenansicht eines komplettierten Rühr- und Schlagbesens gemäß der vorliegenden Erfindung,
Figur 2 einen einzelnen Drahtbügel,
Figur 3a einen Teillängsschnitt durch den Haltekopf des Rühr- und Schlagbesens,
Figur 3b eine axiale Draufsicht auf den Haltekopf nach Figur 3a,
Figur 4a die Seitenansicht eines Klemmelementes für einen Haltekopf nach Figur 3a und 3b,
Figur 4b eine axiale Draufsicht auf das Klemmelement nach Figur 4a.

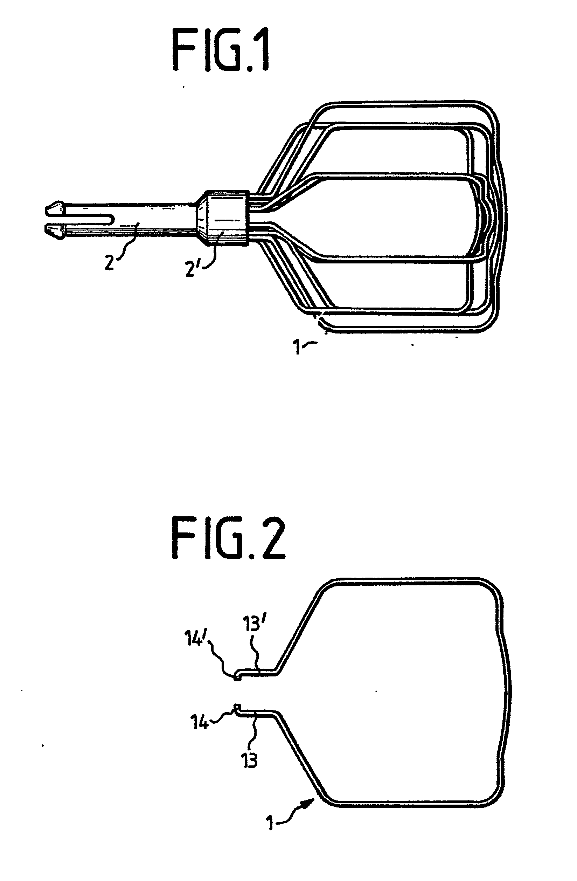

Wie Figur 1 zeigt, weist der erfindungsgemäße Rühr- und Schlagbesen einen Antriebsschaft 2 mit angeformtem Haltekopf 2' und eine Anzahl von in diesem Haltekopf 2' befestigten Drahtbügeln 1 auf. Die Drahtbügel 1 besitzen in dem dargestellten Ausführungsbeispiel - wie aus Figur 2 ersichtlich ist - achsparallele Endabschnitte 13 und 13', die vorzugsweise in etwa rechtwinkligen Fortsätzen 14 und 14' auslaufen.

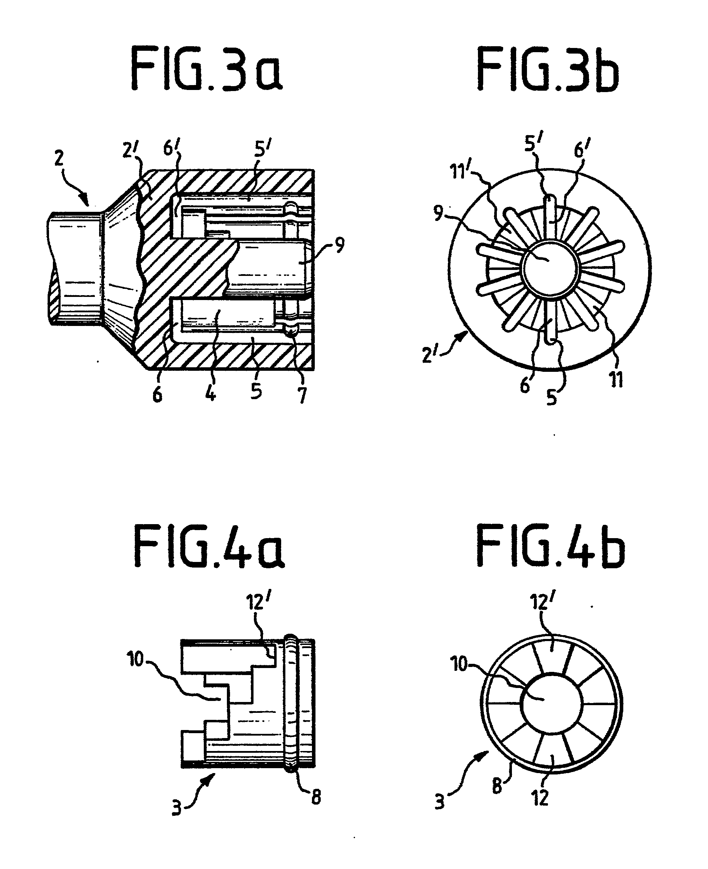

Die vergrößerten Darstellungen des Haltekopfes in den Figuren 3a und 3b und des stopfenförmigen Klemmelements in den Figuren 4a und 4b zeigen deren konstruktive Details. Demnach enthält der Haltekopf 2' eine der Anzahl der vorgesehenen Drahtbügel entsprechende Zahl von diametralen Längsnuten-Paaren 5, 5' zur Aufnahme der Drahtbügel-Endabschnitte 13, 13' sowie Radialnuten-Paare 6, 6' zur Aufnahme der rechtwinkligen Fortsätze 14 und 14' der Drahtbügel-Endabschnitte. Die radialen Nutenpaare 6, 6' sind in axialer Richtung so gestaffelt, daß sie auf den Stufen 11, 11' zweier jeweils den halben Umfang ausfüllender Wendeltreppen liegen, wodurch die Überkreuzung der Mittelabschnitte der Drahtbügel im Stirnbereich des erfindungsgemäßen Rühr- und Schlagbesens auch dann ermöglicht wird, wenn die Drahtbügel sämtlich dieselbe Form und Größe aufweisen. Dementsprechend ist auch die in die Vertiefung 4 des Haltekopfes 2' ragende Stirnfläche des Klemmelements 3 stufig gestaffelt, so daß beim Einsetzen des Klemmelements 3 in die Vertiefung 4 des Haltekopfes 2' an jeder Stufe 11, 11' des Haltekopfes eine Stufe 12, 12' des Klemmelements zur Anlage kommt. Zur sicheren formschlüssigen Fixierung des Klemmelements in der Vertiefung des Haltekopfes weist die Vertiefung eine umlaufende Ringnut 7 und das Klemmelement einen entsprechenden Ringwulst 8 auf. In der Öffnung 4 ist als Montagehilfe ein konzentrisch angeordneter Führungsstift 9 vorgesehen, dem im Klemmelement 3 eine dazu passende Ausnehmung 10 zugeordnet ist.

## Patentansprüche

1. Rühr- und Schlagbesen, insbesondere für elektrische Küchenmaschinen und Handmixgeräte, mit einem mit dem Motorantrieb koppelbaren Schaft (2) und mit einem aus mindestens zwei einander überkreuzenden Drahtbügeln (1) zusammengesetzten Haltekopf (2'), der stirnseitig eine zur Schaftachse konzentrisch verlaufende Vertiefung (4) aufweist, in deren Wandung paarweise einander gegenüberliegende, in Achsrichtung verlaufende Längsnuten (5, 5') eingeformt sind, in die die freien Endabschnitte (13, 13') der Drahtbügel (1) eingelegt sind, wobei diese Endabschnitte (13, 13') mittels eines der Vertiefung (4) angepaßten und in dieser befestigten, stopfenförmigen Klemmelements (3) radial nach außen in die Nuten (5, 5') gepreßt und hierdurch festgeklemmt sind und ferner sind die Endabschnitte (13, 13') der Drahtbügel (1) etwa rechtwinklige Fortsätze (14, 14') aufweisen, dadurch gekennzeichnet, daß die Längsnuten (5, 5') in radiale zur Mitte des Haltekopfes (2') verlaufende Nuten (6, 6') münden, daß die Fortsätze (14, 14') der Endabschnitte (13, 13') der Drahtbügel (1) mittels des Klemmelements (3) in Achsrichtung in die radial verlaufenden Nuten (6, 6') gepreßt sind, daß sowohl der am Ende der Vertiefung (4) ausgebildete Boden als auch die in die Vertiefung (4) ragende Stirnfläche des Klemmelements (3) derart zweifach wendeltreppenartig gestuft sind, daß je zwei diametrale Stufen (11, 11'; 12, 12') zueinander fluchtend auf derselben axialen Höhe liegen, wobei die radial verlaufenden Nuten (6, 6') in die Stufen (11, 11') der Vertiefung (4) eingeformt sind und die Stufenhöhe etwa der Drahtstärke der Drahtbügel (1) entspricht.

2. Rühr- und Schlagbesen nach Anspruch 1, dadurch gekennzeichnet, daß in der Vertiefung (4) ein Führungsstift (9) und in dem Klemmelement (3) eine zum Querschnitt des Führungsstiftes (9) passende Ausnehmung (10) konzentrisch angeordnet sind.

3. Rühr- und Schlagbesen nach Anspruch 1, dadurch gekennzeichnet, daß alle Drahtbügel (1) dieselbe Form und Größe aufweisen und daß sie jeweils in diametralen Nuten (5, 5'; 6, 6') fixiert sind.

4. Rühr- und Schlagbesen nach Anspruch 1 oder 2, dadurch gekennzeichnet, daß die Vertiefung (4) im Haltekopf (2') und das Klemmelement (3) zylinderförmig ausgebildet sind.

5. Rühr- und Schlagbesen nach einem der Ansprüche 1 bis 4, dadurch gekennzeichnet, daß zur selbstklemmenden Befestigung des stopfenförmigen Klemmelements (3) in der Vertiefung (4) des Haltekopfes (2') am Umfang des Klemmelements (3) ein Ringwulst (8) und an der Wandung der Vertiefung (4) eine entsprechend geformte Ringnut (7) vorgesehen sind.

## Claims

1. A mixing and whipping whisk, particularly for electric food processors and portable mixers, including a shaft (2) adapted to be coupled to the motor drive and a retaining head (2') comprising at least two wire members (1) crossing each other, the retaining head having at its one end a socket (4) that is concentric with the shaft axis, with longitudinal grooves (5, 5') which are arranged in opposed pairs and extend in the axial direction being formed in the wall of the socket for receiving the free end portions (13, 13') of the wire members (1), with the end portions (13, 13') being pressed into the grooves (5, 5') radially outwardly, thereby being securely clamped therein, by means of a plug-shaped clamping member (3) conforming to the socket (4) and fastened therein, and further with the end portions (13, 13') of the wire members (1) terminating in approximately rectangular extensions (14, 14'), characterized in that the longitudinal grooves (5, 5') terminate in grooves (6, 6') extending radially to the center of the retaining head (2'), that the extensions (14, 14') of the end portions (13, 13') of the wire members (1) are pressed into the radially extending grooves (6, 6') in axial direction by means of the clamping member (3), that both the bottom formed at the end of the socket (4) and the end of the clamping member (3) extending into the socket (4) are double-stepped in the manner of spiral stairs, such that two diametrically disposed steps (11, 11'; 12, 12') each are in relative alignment at the same axial level, with the radially extending grooves (6, 6') being formed into the steps (11, 11') of the socket (4), and that the height of the steps corresponds approximately to the thickness of the wire members (1).

2. The mixing and whipping whisk as claimed in claim 1, characterized in that a guide pin (9) is concentrically arranged in the socket (4) and that a recess (10) conformed to the cross section of the guide pin (9) is concentrically arranged in the clamping member (3).

3. The mixing and whipping whisk as claimed in claim 1, characterized in that the wire members (1) are all of equal shape and size and are each fixedly located in diametrically disposed grooves (5, 5'; 6, 6').

4. The mixing and whipping whisk as claimed in claim 1 or claim 2, characterized in that the socket (4) in the retaining head (2') and the clamping member (3) are of cylindrical configuration.

5. The mixing and whipping whisk as claimed in any one of the claims 1 to 4, characterized in that for securing the plug-shaped clamping member (3) in the socket (4) of the retaining head (2') in self-clamping fashion, an annular bead (8) is provided on the circumference of the clamping member (3), and a correspondingly formed annular groove (7) is provided in the wall of the socket (4).

## Revendications

1. Fouet de batteur-mélangeur, en particulier pour des appareils de cuisine et des engins manuels de mélange, comprenant une tige (2) pouvant être accouplée à l'organe d'entraînement d'un moteur et une tête de support (2'), qui est composée d'au moins deux arceaux de fil métallique (1) se croisant mutuellement et qui présente du côté frontal une cavité (4) qui s'étend concentriquement à l'axe de la tige et dans la paroi de laquelle sont formées des rainures longitudinales (5, 5'), qui sont disposées l'une en face de l'autre par paire et qui s'étendent suivant la direction de l'axe et dans lesquelles sont insérées les sections d'extrémité libres (13, 13') des arceaux de fil métallique (1), ces sections d'extrémité (13, 13') étant pressées radialement vers l'extérieur dans les rainures (5, 5') et étant bloquées de cette façon au moyen d'un élément de calage (3) en forme de bouchon, adapté à la cavité (4) et fixé dans celle-ci, les sections d'extrémité (13, 13') des arceaux de fil métallique (1) présentant en outre des prolongements (14, 14') approximativement à angle droit, caractérisé en ce que les rainures longitudinales (5, 5') débouchent dans des rainures radiales (6, 6') s'étendant vers le milieu de la tête de support (2'), en ce que les prolongements (14, 14') des sections d'extrémité (13, 13') des arceaux de fil métallique (1) sont pressés, en direction axiale, dans les rainures s'étendant radialement (6, 6') au moyen de l'élément de calage (3), en ce que tant le fond réalisé à l'extrémité de la cavité (4) que la surface frontale de l'élément de calage (3) pénétrant dans la cavité (4) sont agencés à deux reprises en gradins à la manière d'un escalier en colimaçon de façon que deux gradins diamétraux (11, 11'; 12, 12') soient en alignement l'un par rapport à l'autre à la même hauteur axiale, les rainures s'étendant radialement (6, 6') étant formées dans les gradins (11, 11') de la cavité (4) et la hauteur de gradin correspondant approximativement à l'épaisseur du fil métallique des arceaux de fil métallique (1).

2. Fouet de batteur-mélangeur suivant la revendication 1, caractérisé en ce qu'une broche de guidage (9) est agencée concentriquement dans la cavité (4) et en ce qu'un évidement (10) adapté à la section transversale de la broche de guidage (9) est agencé concentriquement dans l'élément de calage (3).

3. Fouet de batteur-mélangeur suivant la revendication 1, caractérisé en ce que tous les arceaux de fil métallique (1) présentent les mêmes forme et grandeur et en ce qu'ils sont fixés respectivement dans des rainures diamétrales (5, 5'; 6, 6').

4. Fouet de batteur-mélangeur suivant l'une ou l'autre des revendications 1 et 2, caractérisé en ce que la cavité (4) de la tête de support (2') et l'élément de calage (3) sont réalisés sous une forme cylindrique.

5. Fouet de batteur-mélangeur suivant l'une quelconque des revendications 1 à 4, caractérisé en ce que, pour la fixation à coincement automatique de l'élément de calage (3) en forme de bouchon dans la cavité (4) de la tête de support (2'), un bourrelet annulaire (8) est prévu à la périphérie de l'élément de calage (3) et une rainure annulaire (7) de forme correspondante, dans la paroi de la cavité (4).

# FIG.1

# FIG.2

# FIG.3a

# FIG.3b

# FIG.4a

# FIG.4b